# EUROPEAN PATENT APPLICATION

(11) **EP 1 561 503 A1**
(43) Date of publication of application: **10.08.2005**
(21) Application number: 05250601.1
(22) Date of filing: 03.02.2005
(51) Int. Cl.: B01D 29/11, B01D 29/21

(54) **Making filter elements by use of radio-frequency receptive filter adhesive**

(30) Priority: 04.02.2004 US 771915
(71) Applicant: ArvinMeritor Technology, LLC, Troy, MI 48084 (US)
(72) Inventor: Wright, Allen, Hope Mills, North Carolina 28348 (US); Warfield, John, Fayetteville, North Carolina 28312 (US); Semrad, Robert, Fayetteville, North Carolina 28304 (US); Frye, Randy, Fayetteville, North Carolina 28306 (US)
(74) Representative: Jones, John Bryn

(57) **Abstract**

A filter manufacturing process includes the steps of dispensing an adhesive including an RF receptive material, and arranging the adhesive between an end disc and a filter media. The adhesive is exposed to RF waves excite the RF receptive material, which generates heat to cure the adhesive. The adhesive need only be exposed to the RF waves for several seconds. As a result, the filter media may be fully cured during the early processing stages. In one example, the adhesive is a vinyl adhesive plastisol. The filter media and end disc are passed through a curing tunnel in which an RF transmitter is arranged proximate to the adhesive to emit RF waves to excite the RF receptive material.

## Description

### BACKGROUND OF THE INVENTION

The present invention relates to a filter manufacturing process using a radio frequency (RF) receptive filter adhesive. This invention also relates to a filter assembly that uses RF receptive adhesive and which is suitable for oil filter and other applications.

Fluid filters incorporate a filter assembly for filtering debris from fluid flowing through the filter. One typical arrangement for oil filter applications includes a filter assembly having a paper pleated filter media captured between a pair of opposing end discs. A center tube may be arranged between the end discs and the filter media to provide further structural rigidity to the filter assembly.

A roll of filter media is fed into a pleating machine to create folds in the media. The filter media contains a material that provides stiffness to the filter media when exposed to heat. The pleated filter media enters an oven where it is preheated to partially cure the material and the filter media. The partially pleated filter media enters a station where it is cut to length and the ends are secured to form a cylindrical shape. A center tube may be inserted at this time.

An adhesive that provides desirable chemical and temperature resistance, such as plastisol, is dispensed onto end discs, which is installed onto the ends of the filter media to form an assembly. The filter media and end disc enter an oven where the adhesive is heated and cured or partially cured. The material in the filter media also finishes curing at this time. The oven where the assembly is finally cured may be of a considerable length, and the assembly may require exposure of several minutes in the oven.

The prior art process described above requires a long assembly line to incorporate the various heating steps in the process. Moreover, the filter media and end discs must be handled several times to partially cure the end disc to the filter media one at a time. Finally, the long exposure of the filter assembly to high temperatures in the oven eliminates the ability to use non-metallic end discs, which could be destroyed at high temperatures typically experienced in the final curing oven. Therefore, what is needed is a filter manufacturing process that reduces the cost and space associated with the long assembly line and numerous ovens while enabling use of non-metallic end disc materials.

### SUMMARY OF THE INVENTION

The inventive filter manufacturing process includes the steps of dispensing an adhesive including an RF receptive material, and arranging the adhesive between an end disc and a filter media. The adhesive is exposed to RF waves to excite the RF receptive material, which generates heat to cure the adhesive. The adhesive need only be exposed to the RF waves for several seconds to generate sufficient heat to fully cure the adhesive.

The RF receptive material and the adhesive generates heat of a desired level only in a localized area. As a result, the filter media may be fully cured during the early processing stages without becoming damaged by subsequent heating. In one example, the adhesive is a vinyl adhesive plastisol. The end discs may be arranged into the filter media and cured one at a time or simultaneously. The filter assembly is passed through a curing tunnel in which an RF transmitter is arranged proximate to the adhesive. The strength of the RF waves diminishes in proportion to the square of the distance from the RF transmitter to the RF receptive material. As a result, the RF waves do not generate a significant amount of heat in portions of the filter media away from the adhesive.

Accordingly, the above invention provides a filter manufacturing process that reduces the cost and space associated with the long assembly line and numerous ovens while enabling use of non-metallic end disc materials.

These and other features of the present invention can be best understood from the following specification and drawings, the following of which is a brief description.

### BRIEF DESCRIPTION OF THE DRAWINGS

Figure 1 is a flowchart depicting the inventive filter manufacturing process.
Figure 2 is a schematic of the filter assembly line.
Figure 3 is a highly schematic depiction of the inventive filter adhesive having RF receptive material.
Figure 4 is a schematic view of the inventive filter assembly undergoing curing in a curing tunnel.

### DETAILED DESCRIPTION OF THE PREFERRED EMBODIMENT

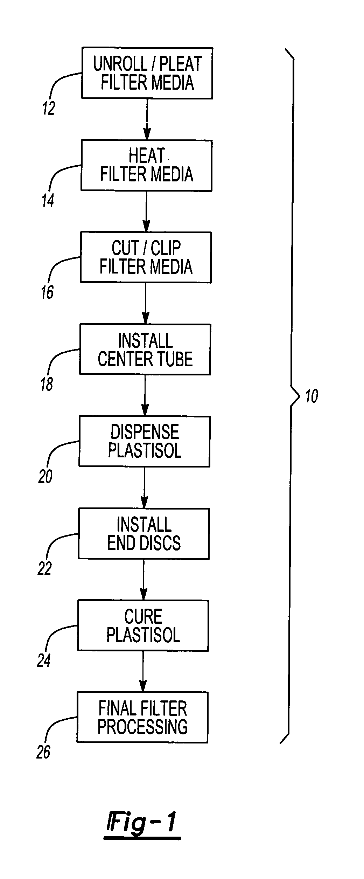

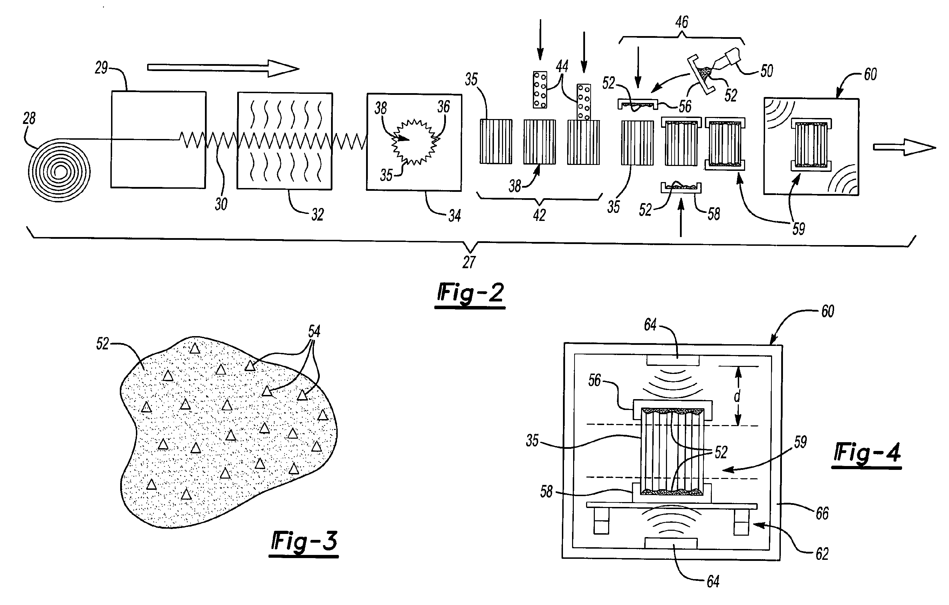

A flow chart depicting the inventive filter manufacturing process 10 is shown in Figure 1. The flow chart of Figure 1 may be read in connection with the filter assembly line 27 shown in Figure 2. The inventive process will be first described generally relative to Figure 1 and then described in greater detail relative to Figures 2-4.

The filter media is unrolled and pleated, as indicated at 12. The filter media is heated, as indicated at 14. The filter media may be heated to the extent that the material in the filter media is fully cured. The filter media is cut to size and the free ends are joined together to form a cylindrical shaped filter, as indicated at 16. A center tube may be installed into the filter media, if desired, as indicated at 18. An adhesive having a radio frequency (RF) receptive material is dispensed, for securing end discs to the filter media as indicated at 20. End discs are installed onto the filter media, as indicated at 22. The adhesive is cured, as indicated at 24, by briefly exposing the adhesive to RF waves. The filter assembly comprising the filter media and end discs is ready for final filter processing, as indicated at 26, immediately following the curing of the adhesive.

Referring to Figure 2, a roll of paper filter media 28 is fed into a pleater 29 that makes folds in the filter media to produce a pleated paper filter media 30. The pleated paper filter media 30 is fed into an oven 32 where the material in the filter media is exposed to heat sufficient to fully cure the material in the filter media. A sacrificial dye in the filter media colors the filter media tan when the material in the filter media has been fully cured providing a visual indication that the media has cured as desired. The prior art filter manufacturing processes did not enable the filter media to be fully cured since the filter media was exposed to a significant amount of heat during the adhesive curing process, which would destroy or significantly degrade the filter media. However, some heat was required to stiffen the media better enabling processing.

The cured filter media is fed through a machine 34 that cuts the filter media into desired lengths and forms the filter media into a cylindrical-shaped filter element 35. The free ends of the filter element 35 are joined together, for example, by clips 36, which forms a central opening 38. A center tube 44 may be inserted into the central opening 38 at station 42 to provide additional structural support for the filter element 38 during filter operation, however, a center tube 44 need not be used.

A dispenser 50 deposits an adhesive 52 onto first 56 and second 58 end discs at a station 46. While metal end discs are typically used, paper or other non-metallic end discs may now be used with the inventive manufacturing process due to the reduced temperatures and exposure as compared to the prior art process. Referring to Figure 3, the adhesive 52 includes an RF receptive material 54 dispersed throughout. The RF receptive material 54 becomes excited in response to exposure to RF waves, which produces heat.

One end disc 56 and 58 may arranged onto the filter element 35 and cured one at a time. Alternatively, both of the end discs 56 and 58 may be arranged onto the filter element 35 and the adhesive on the end discs 56 and 58 simultaneously cured. An adhesive 52 having a greater viscosity enables the end discs 56 and 58 to be installed onto the filter element 35 and cured simultaneously since the adhesive will run more slowly. A lower viscosity adhesive may also be used, however, the end disc 56 and 58 may have to be cured and installed onto the filter element 35 one at a time to avoid the adhesive 52 from running or wicking into the filter media.

Separate end discs may be eliminated and instead provided by the adhesive. For example, adhesive plastisol may be inserted into a mold and an end of the filter element 35 inserted into the adhesive. The adhesive end disc then may be cured upon exposure to RF waves.

The filter element 35, discs 56 and 58, and adhesive 52 together comprise the filter assembly 59. The filter assembly 59 is fed through a curing tunnel 60 to heat and cure the adhesive 52. The curing tunnel 60 of the inventive filter manufacturing process 10 is shown in more detail in Figure 4. The filter assembly 59 is fed through the curing tunnel 60 on a conveyor 62. The curing tunnel 60 includes RF emitters 64 arranged proximate to the adhesive 52. RF waves create a near field effect in which the strength of the waves decrease the farther the waves are from the RF emitters 64 at a relationship that is the square of the distance from the RF emitter 64. As a result, localized heating of the adhesive 52 may be achieved without heating other portions of the filter media, which would otherwise destroy or degrade the filter media. The RF emitters 64 are positioned at a distance, away from the adhesive 52 that is selected to sufficiently excite the RF receptive material 54 thereby generating an adequate amount of heat to cure the adhesive 52 without degrading the filter media and other areas of the filter assembly 59. The curing tunnel 60 may include a shield 66 to contain the RF waves.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of manufacturing a filter comprising the steps of:
a) dispensing an adhesive including a radio frequency receptive material;
b) arranging the adhesive between first and second filter components; and
c) exposing the adhesive to radio frequency waves and exciting the radio frequency receptive material to cure the adhesive.

2. The method according to claim 1, wherein the first and second components respectively are a filter media and an end disc.

3. The method according to claim 2, wherein the end disc is a non-metallic end disc.

4. The method according to claim 2 or 3, wherein the filter media is a paper filter media.

5. The method according to any one of claims 2 to 4 comprising the step of fully curing the filter media prior to performing step c).

6. The method according to claim 5, wherein step c) generates heat in a middle portion of the filter media below a cure temperature.

7. The method according to any one of claims 2 to 6, wherein step b) comprises arranging the adhesive between the filter media and another end disc prior to performing step c).

8. The method according to any one of claims 2 to 7, wherein step c) comprises emitting the radio frequency waves from opposing radio frequency transmitters arranged proximate to the end disc and the other end disc.

9. The method according to any one of claims 2 to 8 comprising the step of installing a center tube in the filter media prior to performing the step of arranging the adhesive between the filter media and another end disc.

10. A fluid filter assembly comprising:
an end disc;
a filter media arranged between said first and second end discs; and
an adhesive including an radio frequency receptive material for generating heat in response to exposure to radio frequency waves, said adhesive joining said filter media to said end disc.

11. The fluid filter assembly according to claim 10 comprising another end disc, said adhesive joining said filter media to said other end disc.

12. The fluid filter assembly according to claim 10 or 11 comprising a center tube arranged within said filter media between said end discs.

13. The fluid filter assembly according to claim 10, wherein said end disc is non-metallic.

14. The fluid filter assembly according to claim 10, wherein said end disc is constructed from said adhesive.

15. The method according to any one of claims 1 to 9, or the fluid filter assembly according to any one of claims 10 to 14, wherein said adhesive is plastisol.
